# EUROPEAN PATENT SPECIFICATION

(11) **EP 2 389 498 B1**
(45) Date of publication and mention of the grant of the patent: **21.11.2012**
(21) Application number: 10700884.9
(22) Date of filing: 07.01.2010
(51) Int. Cl.: E21B 41/00, E21B 47/00, E21B 47/01, E21B 47/06, E21B 47/10, E21B 47/12, H02J 17/00

(54) **METHOD AND APPARATUS FOR IN-SITU WELLBORE MEASUREMENTS**
VERFAHREN UND VORRICHTUNG FÜR IN-SITU-BOHRLOCHMESSUNGEN
PROCÉDÉ ET APPAREIL POUR LES MESURES DE FORAGE SUR SITE

(30) Priority: 12.01.2009 GB 0900446; 25.11.2009 GB 0920674
(43) Date of publication of application: 30.11.2011
(73) Proprietor: Sensor Developments AS, 3241 Sandefjord (NO)
(72) Inventor: GODAGER, Oivind, N-3222 Sandefjord (NO)
(74) Representative: Copsey, Timothy Graham
(86) International application number: PCT/GB2010/000003
(87) International publication number: WO 2010/079320

(56) References cited:
- WO-A1-01/65069
- WO-A1-03/056692
- WO-A1-2007/071975
- US-A- 5 260 661
- US-A1- 2006 005 965
- US-A1- 2008 106 972

## Description

This invention relates to a method and apparatus for in-situ wellbore measurements for the monitoring and control of oil and gas production, injection and observation wells. More particularly, this invention relates to a method and apparatus to monitor wellbore and formation parameters in-situ. Operating means may be wirelessly installed behind the wellbore casing or production barrier, without the need for a cable or cord to power, and without compromising the pressure integrity of the well or well design in any way.

The present invention leads to better interpretation of process or formation parameters, as the sensors are placed closer to or in direct contact with the investigation zone of interest. The apparatus involved enables parameters to be measured simultaneously inside and outside of the wellbore casing. The sensor closeness to formation and the overall performance of the data acquisition enable the operator to better distinguish whether a change in physical parameter measured is caused by change of the physical parameter itself or is caused by process or environmental fluctuations.

The invention also includes a telemetry for the communication from surface to downhole as well as a combined "power harvesting" and telemetry device for communicating with the wireless sensor unit that is located behind the well casing or barrier. The surface-to-downhole power and telemetry link enables numerous sensor units to be attached and operated on the same downhole cable. This network configuration enables in-situ monitor of wellbore parameters of different zones in one and the same wellbore.

The management of oil and gas as well as storage type reservoirs constitutes an on-going concern of the petroleum industry. Those concerns are mainly due to the enormous monetary expenses involved in manufacturing and running any type of petroleum well as well as the risks associated with workovers and recompletions. Herein, a petroleum type well is defined as any type well being drilled and equipped for the purpose of producing or storage of hydrocarbon fractures from or to subsurface formations. Further, petroleum type wells are categorized as any of or combination, storage, observation, producing or injection type wells.

Modem reservoir management systems more and more look into the advancement of including measurements from outside of the wellbore casing. Measurements close as well as far from the wellbore are being considered. Thus the prospect and purpose of formation parameter monitoring has become more complex than was previously the case. As with the industry in general, the motivation is to fully understand the physical properties and geometry of the reservoir as this in the long-term contributes to extending the lifetime of the well as well as production yields.

There are numerous formation parameters that may be of interest when having sensor technology available for looking into the formation side of the casing as in the present invention. Thus, the sensor measurement technology proposed applies to any type formation measurements such as, for example, resistivity, multi-axes seismic, radiation, pressure, temperature, chemical means, to mention a few. For the purpose of this invention we have chosen a specific measurement application in order to display the features and functionality of the present invention. Thus, the process example for the continuing discussion is the art to correctly predict pore-pressure of a formation outside the wellbore casing at the same time as the well produces. The application requires the sensor to be cemented in place behind the casing as close to the formation as possible.

Generally, all control and access of the petroleum well is provided through a wellhead. The present invention has applications to any petroleum type wells, for example, wells located on land, on a platform or at the seabed. However, for simplicity and to facilitate uniform understanding of the present invention it is described herein particularly as it relates to a generic type petroleum well and its wellhead.

There are numerous prior art patents related to the measurement of parameters outside the well casing annuli. One system that is close is described in US6,513,596B2. The system described is illustrative in nature and show a well data monitoring system with sensors placed inside the outer annuli of a well casing program. The system is a non-intrusive approach to measure pressure arid other parameters within a plurality of annuli space and preserves the pressure containing integrity of the well. The system shows sensors placed inside the annuli that communicate with an interrogation system located externally or internally of the wellhead housing. It confirms that the sensors will require power and communication to perform that operation and lists generally alternative sources to power and methods of communication without solving the actual challenges of how to implement it in a real world application.

This method is not believed to have been installed in any petroleum well or field.

Another related approach is described by EP 1 662 673 Al. The method described by this is magnetic saturation of the well casing or conduit to make a "window" for operating locally an AC magnetic field to excite a sensor located outside a casing. The principle described is not considered realistic due to a relatively high power consumption required to magnetically saturate the well casing. Further, the method would require uniform current flux within the material to be saturated which in turn would require optimum contact (evenly distributed contact resistance over the exposed area) performance of the electrodes implied. Due to combination of exposed electrodes and high currents, such system would rapidly degrade due to galvanic reactions (oxidation/corrosion) inside the pressure containment system of a well. Thus, the method is considered non-applicable for a prescribed permanent wellbore measurement application due to exposed electrodes and high current density required to magnetically saturate the wellbore casing permanently. Further, it is not illustrated nor believed this method and apparatus may work in a multi- sensor configuration to provide a common infrastructure to enable placement of in-situ wellbore sensors at different zones of investigation like the present invention.

US2006/0005965 which is considered the closest prior art, discloses a sensor system in which a sensor body is installed in a hole formed in the casing of tubing to extend between the inside and outside of the casing or tubing, the sensor elements being capable of sensing properties of an underground formation surrounding of the well.

WO01/65069 discloses a power supply apparatus for supplying power and communications within a piping structure such that an external power transfer device is magnetically coupled to an internal power transfer device within separate piping structures.

US2008/0106972 discloses the use of elastodynamic waves to communicate between sensors deployed in a formation and a hub located in the well or at the outer surface of the casing.

WO2007/071975 discloses a device for generation of electrical power from a fluid flow, for example for harvesting power from flows downhole in oil and gas wells.

US5260661 discloses a method for measuring geophysical properties of geological formations using the longitudinal components of low frequency AC magnetic fields from within cased boreholes.

An aspect of the present invention is to provide method and apparatus to obtain in-situ wellbore measurements. In certain applications it is required to place sensors behind the well casing close to the formation. To achieve this, the need to establish a wireless link for power and communication across the wellbore casing or barrier is required. Traditionally, sensors have not been placed behind ithe casing due to the need of a traditional cable to provide power and communication. However, the introduction of a cable and a penetration in the casing of a well does not contribute pressure integrity of the barrier and is a non-optimal installation. Thus, only special applications involving a cemented section of a liner or equivalent have been accomplished, providing sensors on the outside of the production casing.

Furthermore, and adding to the complexity, some applications of new production methods make use of the traditional annuli space (annulus-A) as live elements of their process system. Consequently, new regulatory requirements arise and a need to move the traditional production casing barrier and well integrity outwards follows. The present invention discloses a non-intrusive method that preserves the pressure integrity of the well at the same time as it allows sensors to be placed behind the wellbore casing. Another important feature of the method and apparatus of this invention is that it allows a cluster of sensor systems (SEU) to be mounted and operated on the same electrical cable downhole. Thus, a multi-sensor configuration in borehole measurement is achievable.

A second aspect of the invention is that the system is able to correct for transient offsets induced by environmental or process load changes. Typically load changes are caused by fluctuations in the process or environment temperature. This is the case of a pressure sensing device that conveys a constant volume of hydraulic fluid, such as in a pore pressure measurement application. As the temperature of a producing well changes or fluctuates, the fluid of the system and the pressure inside the containment system of a pressure sensor will expand or contract resulting in an offset reading. The change is not critical, but simply adds to misinterpretation and erroneous monitoring of pressure, over the transient period. The smaller the containment system, the larger the deviation is. To overcome this, a real-time acquisition of process and environment data in combination with the in-situ measurements constitutes an important advance over prior art in that the present invention can help management to anticipate and react to potential problems as they appear and even before they occur. In addition, the remote sensor package can be dressed with numerous and different evaluation sensors that may be important to evaluate or filter the status and or integrity of a wellbore measurement parameter.

In accordance with one aspect of the present invention is a Wireless Sensor Unit (WSU). The WSU is a non-intrusive in-situ measurement system provided for monitoring one or more wellbore parameters behind the casing close to the formation. A feature of the WSU is that it contains a Sensor Package (SP) that for the purpose of illustrating this invention consists of a sensor package to permanently monitor pressure and temperature without compromising any of the pressure integrity barriers of the well casing annuli in any way. The SP is specific for the application and consists of a set of highly accurate quartz pressure and temperature sensor crystals and produces outputs of pressure and temperature as well as temperature gradients (i.e., change). In turn, the SP is connected to an Electromagnetic Transceiver (ET) which includes circuitry for two-way communication and power harvesting. Both the SP and the ET is attached or integrated to the outer perimeter of a Non-Magnetic Casing Section (NMCS) which is part of the well casing program (barrier).

Another aspect of the present invention is a Sensor Energizer Unit (SEU) and is typically part of or attached to the well completion tubing. The SEU is adapted to host the Wireless Sensor Unit. The SEU consists of three main elements. The first and main element of the SEU is an Electromagnetic Armature (EA), second; an Adjustable Mandrel (AM), and third; a Cable Adaptor (CA). The EA provides as a combination power source and communications link for the WSU. The principle transmission of the EA is by low frequency induction or electromagnetic (EM) means, which is picked up and converted to electric energy by the WSU. To ensure optimum efficiency vise versa the WSU, the EA is attached to the AM, which enhances the facility or "fine tune" to optimize the efficiency to host the WSU by vertical adjustment means. Attached to the EA is also a Cable Adaptor (CA) connecting the control cable from outside of the well. The control cable is attached to the completion tubing by traditional cable clamps and exits the well thru the wellhead, all according to prior art means. Typically, the control cable is a single-conductor Tubing Electric Cable (TEC) type, providing power to the SEU as well as and communication between the mentioned and the monitoring facilities (i.e., outside the well).

For practical reasons the EA may be attached to an Adjustable Mandrel (AM) that provides freedom of vertical adjustment/positioning of the EA in respect to the WSU. The freedom of vertical adjustment after being attached to the process tubing enables the operators involved to position it in the exact position adjacent to the WSU in the well without introducing "space-out" complexity, involving the completion or process tubing inside the well. Thus, the purpose of the AM is two-fold, first; to provide a holder, carrier and/or protector for the EA, secondly; to allow vertical adjustment so the two main embodiments of the invention (i.e., the WSU and the SEU) are correctly arranged in relation to one Another.

Depending on the type and conditions to provide a particular wellbore measurement, the SEU may also include a Sensor Package (SP) equal to or different that of the WSU to enhance more complex data acquisition to interpret wellbore measurements.

According to one aspect of the present invention, there is provided apparatus to provide monitoring of parameters outside the wellbore casing of a well, said apparatus comprising: a Wireless Sensor Unit (WSU), placed outside a section of a non-magnetic casing, said WSU including a sensor device to measure parameters of its surroundings, in which the WSU may be installed or positioned at any elevation of the wellbore and wherein the WSU is powered by Power Harvesting where the frequency of the induction signal is in the range of 10-1000 Hz for deep penetration through the non-magnetic casing; an internal Sensor Energizer Unit (SEU) placed inside the wellbore casing, said SEU being used for power and communication with the WSU, and wherein the SEU is attached to the well tubing or completion program by tubing having a thread that allows adjustment of its elevation, and wherein SEU converts the dc power supplied on a cable from surface to an alternating electromagnetic field that provides a source of power for the WSU outside the casing; wherein the SEU and WSU use an electromagnetic modulation technique to provide communication of data between the two components; and wherein the SEU and the WSU are arranged to be at exactly the same elevation.

The WSU may be mounted near the wellhead or it may be mounted distally from the wellhead, far down in the formation. There may be two or more sensors in the WSU and these may all or part be placed on the outside of the wellbore casing without compromising the pressure integrity of the well.

The sensors measure one or more parameters of the surroundings and they may be branched off from the WSU and connected to a common electrical wire harness attached to the outside of the casing. The wiring harness is either a single or multi-conductor type downhole cable (TEC).

The sensor or sensors of the WSU may be of a permanent type which may be cemented in place directly facing the formation or which may be open hole and directly facing the formation. Alternatively, the WSU and its sensor configuration may be part of a wellbore pressure containment system in the annulus and facing an outer wellbore casing or cemented in place facing an outer wellbore casing.

The apparatus may further comprise one or more power harvesting coils spaced out over a given section of the non magnetic casing. The coils or a band of the non-magnetic casing may provide the required completion or space-out tolerance for system when landing the well tubing or tubing-hanger in the wellhead or tree.

The WSU may additionally include or be connected to a secondary energy source which may be a battery or a downhole generator, for example.

The SEU may further include one or more sensors to measure parameters inside the wellbore casing or tubing to which it is attached and these sensors may be an integral part of the SEU, or they may be branched-off from the SEU and connected to a common electrical wiring harness, or the sensor system may be a combination of integral sensor and sensors branched-off. When present, the wire harness may be a single or multi- conductor type downhole cable (TEC).

The sensors of the present invention may measure parameters relating to the well process, its structural components, or formation parameters.

Examples of well process properties which may be measured include: pressure, temperature, flow quantity, flow velocity, flow direction, turbidity, composition, oil level, oil-water interface level, density, salinity, displacements, vibrations, pH, resistivity, radioactivity, sand content, thermal conductivity, as well as other chemical and physical properties.

Examples of structural components of the wellbore which may be measured include: shock, vibrations, inclinations, magnetic properties, electrical properties, tool-face or other type of tool orientation, as well as stress and strain properties

Examples of formation or open hole properties outside the wellbore casing which may be measured include: pressure, temperature, radioactivity, resistivity, density, pH, salinity, electro- magnetic and/or electrical fields, sound, sound velocity, thermal conductivity, as well as other chemical and physical properties.

The apparatus may further include means to induce a response from the surroundings, which means may be selected from: a magnetic field source, an electric field source, sound waves, pressure, temperature, shear-force waves, other final element or actuator part of downhole process control, final element or actuator used towards formation to assist any of above listed measurements.

The apparatus may also additionally further comprise one or more of: noise cancelling of parameter offsets due to offset created by the well process or environment; prediction and correction of measurements due to thermal and pressure gradients within the system.

The invention also extends to a method of monitoring parameters outside the wellbore casing of a well, said method comprising: installing a Wireless Sensor Unit (WSU), including a sensor device to measure parameters of its surroundings, at a location outside a section of a non-magnetic casing, in which the WSU may be installed or positioned at any elevation of the wellbore; installing an internal Sensor Energizer Unit (SEU) inside the wellbore casing, said SEU being used for power and communication with the WSU, and wherein the SEU is attached to the well tubing or completion program by tubing having a thread that allows adjustment of its elevation; arranging the SEU and the WSU to be at exactly the same elevation; powering the WSU by Power Harvesting where the frequency of the induction signal is in the range of 10-1000 Hz for deep penetration through the non-magnetic casing; converting the dc power supplied on a cable from surface to an alternating electromagnetic field that provides a source of power for the WSU outside the casing; and using an electromagnetic modulation technique to provide communication of data between the WSU and the SEU.

Optional and preferred features of the apparatus as discussed above apply equally to the method of the present invention and will be discussed further in the specific description below.

These and other features and advantages of the present invention will be appreciated and understood by those skilled in the art from the detailed description and drawings. Referring now to drawings, wherein like elements are numbered alike in the several Figures:
Figure 1 is a diagrammatic view depicting the Method and Apparatus of the present invention for use in In-situ Wellbore Measurements;
Figure 2 shows an enlarged diagrammatic view of one aspect of Figure 1, depicting the Wireless Sensor Unit (WSU).
Figure 3 shows an enlarged diagrammatic view of another aspect of Figure 1, depicting the Sensor Energizer Unit (SEU);
Figure 4 shows a simplified electrical block diagram of the Pressure Management System in accordance with the present invention;
Figure 5 is a diagrammatic view similar to Figure 1, but showing the use of multiple sensors on either side of the wellbore casing;
Figure 6 is a block diagram showing a sensor network running from a single note;
Figure 7 is a diagrammatic view similar to Figure 1, showing the use of multiple sensors on a single down hole cable; and
Figure 8 is a block diagram showing the sensor network of Figure 7.

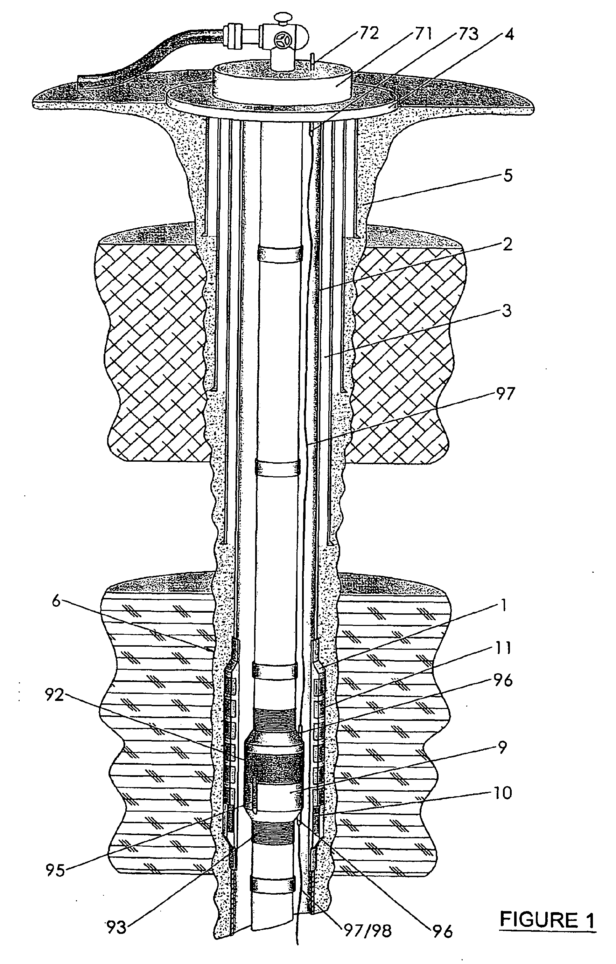

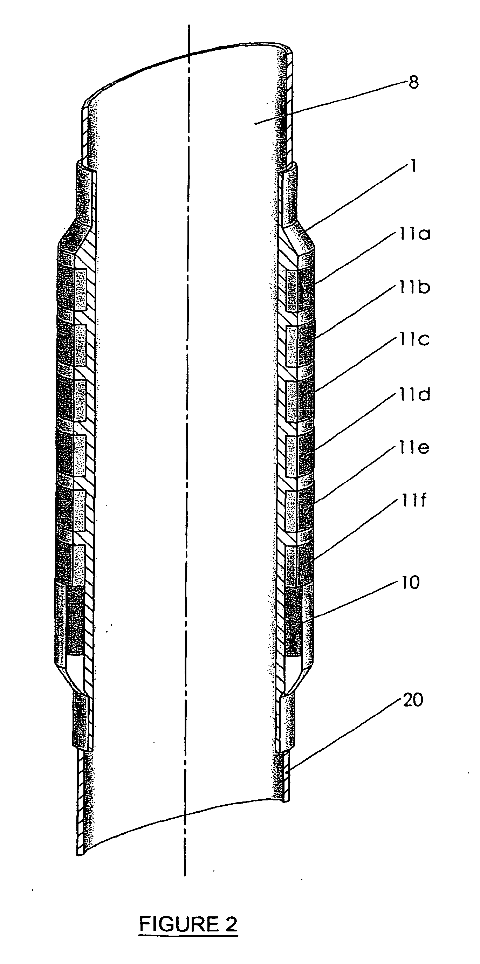

This invention relates to in-situ wellbore measurements. The object is to place one or more sensors in and around a wellbore in order to measure a physical parameter or property of a formation. The most common or frequent parameters to monitor are one or both of pressure and temperature at a target elevation within a reservoir or formation. In particular a Wireless Sensor Unit (WSU) 1 in the present invention is made part of the casing program of the main production barrier 2 of the well. The Casing Section 20 (see figure 2) of the WSU 1 is made in a non-magnetic material and hosts a Sensor Package 10 and a plurality of Electromagnetic Transceivers 11a-f. For the purpose of this invention the Sensor Package is configured to measure and monitor the annular space outside the main barrier of the well producing system as shown in figure 1.

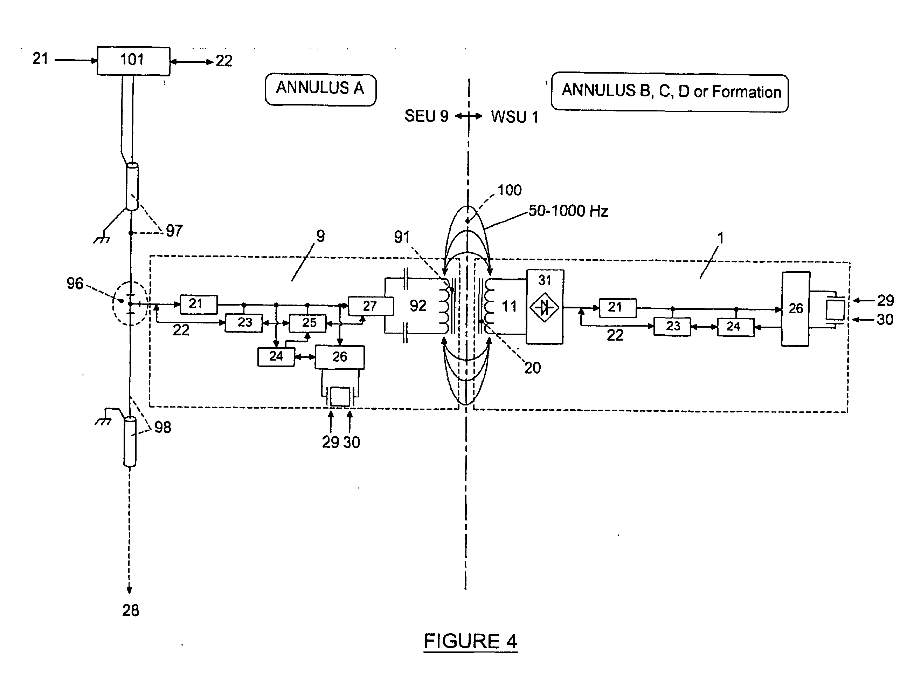

Referring to Figure 1 this space 3 is also often referred to as Annulus-B and the WSU 1 is typically positioned close to the and underneath the wellhead structure or housing 4. The wellhead structure is shown here in context, with reference numerals depicting the earth through which the well has been bored, where 6 depicts the wellbore. The WSU 1 is wirelessly powered by Sensor Energize Unit (SEU) 9 by electromagnetic means, also referred to as "power harvesting" (referred to as reference numeral 100 in Figure 4) by those who are skilled in the art of electrical engineering. The WSU 1 is provided with supervisory circuits, that enables two-way communications with the SEU 9. In turn, the communication is by electromagnetic means.

Figure 2 shows the main elements of one component of the present invention in greater detail, which together defines the configuration of the Wireless Sensor Unit (WSU) 1. The WSU 1 consists of a Sensor Package (SP) 10, an Electromagnetic Transceiver (ET) 11a-f, and a Non-Magnetic Casing Section (NMCS) 20. A more detailed connection and function diagram of the WSU 1 is illustrated on the right hand side of the dotted line of Figure 4.

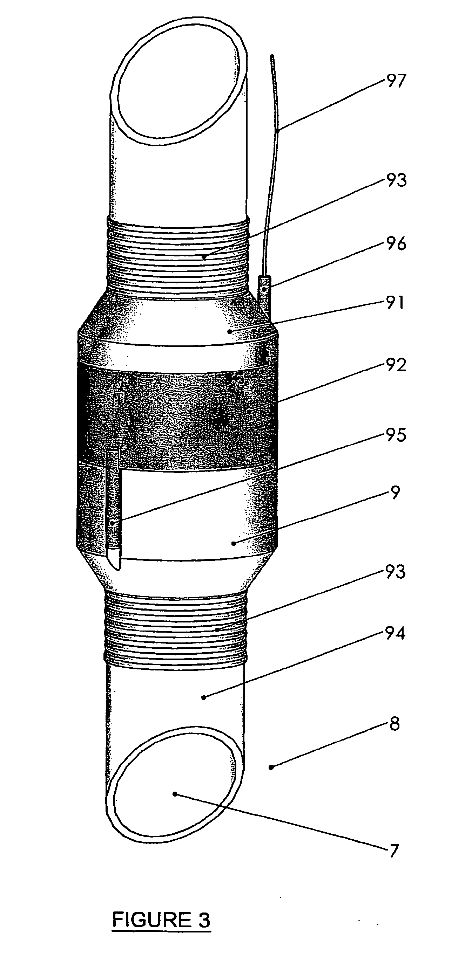

Referring to Figure 3, a second component of the present invention is the Sensor Energizer Unit (SEU) 9. The SEU 9 is typically mounted to a Mandrel 91 and attached to a section of the production tubing 94. For the present illustration production tubing 94 is provided with an external thread 93 although this could equally be an internal thread. The thread 93 allows the elevation of the SEU 9 to be adjusted so that the elevation of the SEU 9 in the well corresponds exactly with the elevation of the WSU 1. This will ensure proper communications as well as providing optimum efficiency of the power harvesting (reference 100 in Figure 4).

Power supply and communications for the SEU 9 are provided through the Tubular Electric Cable (TEC) 97 which is attached to the process tubing 7 and feedthrough 72 and 73, typically exiting at the tubing hanger 71 (see figure 1). The SEU 9 may also host a Sensor Package 95, which in principle is the same as Sensor Package 10 of the WSU 1 but be configured to read parameters of the inner annuli 8. Typically, the inner annulus 8 is often referred to as Annulus-A by those skilled in the art, otherwise this is below the production packer of the well.

Referring to Figures 3 and 4, power to the SEU 9 is provided form the well site mounted Downhole Interface Unit (DIU) 101 through cable conduit (TEC) 97. The TEC 97 also hosts the communication in and out of the well between the DIU 101 and the SEU 9. Typically the communication is by means of a superimposed signal onto the power as the TEC 97 is a single-conductor cable. TEC 97 is terminated at the SEU 9 at the Cable Adaptor 96. Power is routed internally through the mandrel 91 and connected to the Electromagnetic Armature (EA) 92. A detailed description of the internal electronic functions and routing is given in Figure 4, on the left hand side of the dotted line.

Also, if required a Sensor Package (SP) 95 may be adapted to provide more data for the evaluation of the pressure integrity of the annuli of interest. SP 95 the same as the SP 10 of the WSU but may alternatively be any kind of sensor capable of providing data to enhance safety and risk assessment of a particular well.

For example, the sensor 95 could measure one or more of the following properties: pressure, temperature, flow quantity, flow velocity, flow direction, turbidity, composition, oil level, oil-water interface level, density, salinity, radioactivity, displacement, vibrations, pH, resistivity, sand content, thermal conductivity, as well as other chemical and physical properties.

As mentioned, EA 92 and SP 95, may be attached to mandrel 91. The mandrel 91 serves as both a holder for and protection of the mentioned elements and allows for adjustment to match the vertical position or elevation of WSU 1. The adjustment range of the present invention is typically in the range 0-50cm, for example 10-40cm or 25-35cm but may be more or less depending on the requirement to provide freedom of proper space-out for the installation. Both the Mandrel 91 and the process tubing 94 may be manufactured in a magnetic material.

Referring to Figure 4, this is a simplified electronic block diagram of the present invention and is provided for those skilled in the art in order to visualize the inherent architecture as well as operation of the system. As may be seen from the block diagram one or more SEU 9 units may be attached to the control cable 97.

In this figure, this is illustrated using additional TEC 98, leading to additional SEU units shown by 28. In a multi-unit system (i.e., two or more SEU 9 units), each SEU is connected in a parallel configuration onto the cable 97. Due to relatively high power consumption, the nature of the system is also that only one SEU unit is active at a time.

The active status of a SEU is addressed during the initial start-up and through a command issued by the DIU 101 at the well site. At power-up the DIU actively addresses one of the SEU units 9 on the line and makes it the active node of the system. To change to another SEU, the DIU simply powers-down the line to reset or resume. At the next power-up another SEU may be addressed. Using this mode of operation, power is directed to one SEU at the time and the system is capable of hosting many SEU units on the line without gross voltage drop on the cable due to heavy loads.

Power harvesting 100 is achieved by correct vertical alignment of the SEU 9 in relation to the WSU 1. As mentioned above, this adjustment is provided by the adjustable mandrel 91. A second requirement and feature of this invention is the use of the non-magnetic casing section (NMCS) 20 which makes the lower frequency (50-1000 Hz) electromagnetic field induced by the Electromagnetic Armature (EA) 92 deep penetrating and thus visible to the Electromagnetic Transceiver (ET) 11 of the WSU 1. The efficiency of the power transfer is poor due to non-ideal conditions of the induction coupling, however tests show that a ratio in the range of 20:1 is achievable and is sufficient to operate a low-power sensor package as described in the present invention.

Referring again to figure 4 in detail, the SEU 9 consists of a Power Supply 21 that provide a regulated dc for the electronic functions of the unit. The SEU is supervised by the internal Controller 25. Upon a wake-up call, the Controller makes the address interpretation and when addressed it turns on the internal Modulating Chopper Oscillator 27. The MCO converts electrical energy into an alternating magnetic field through the Electromagnetic Armature 92. The induced field has a frequency that enables electromagnetic waves to propagate deeply into the surrounding structures, and thereafter be picked up by the Electromagnetic Transceiver (ET) 11 a-f of the WSU 1. The MCO also assists in modulating data 22 in between the SEU and the WSU.

The SEU also has a Modem 23. The main purpose of the Modem is to read and transmit data 22 from/to the power line 97. However, data 22 in and out of the SEU is buffered and interpreted by the internal Controller 25. The Crystal Sensors (for example, for detecting pressure 29 and temperature 30) of the described device, are driven by the respective Oscillators 26 and each sensor crystal provides a frequency output as function of its measurand. The sensor frequency is measured by the Signal Processor 24 and is continuously feed to an input buffer of the Controller 25.

For the WSU 1, the internal electronic functions are equivalent to these for the SEU 9 with the exception of the Rectifying Bridge 31. The Rectifying Bridge converts the alternating current induced by the local electromagnetic field into a dc voltage/current that internally powers the WSU 1. The prescribed electromagnetic principle used is referred to as Power Harvesting 100 by persons skilled in the art. For the purpose of this invention, the WSU 1 is provided with highly accurate pressure 29 and temperature 30 sensors. In principle, the WSU 1 may include a Sensor Package that may hold any kind of sensors to measure a plurality of measurement parameters outside the wellbore casing or barrier.

Figures 1 to 4 have generally shown a system including either a single sensor within the SEU or two sensors, one within the SEU and the other in the WSU.

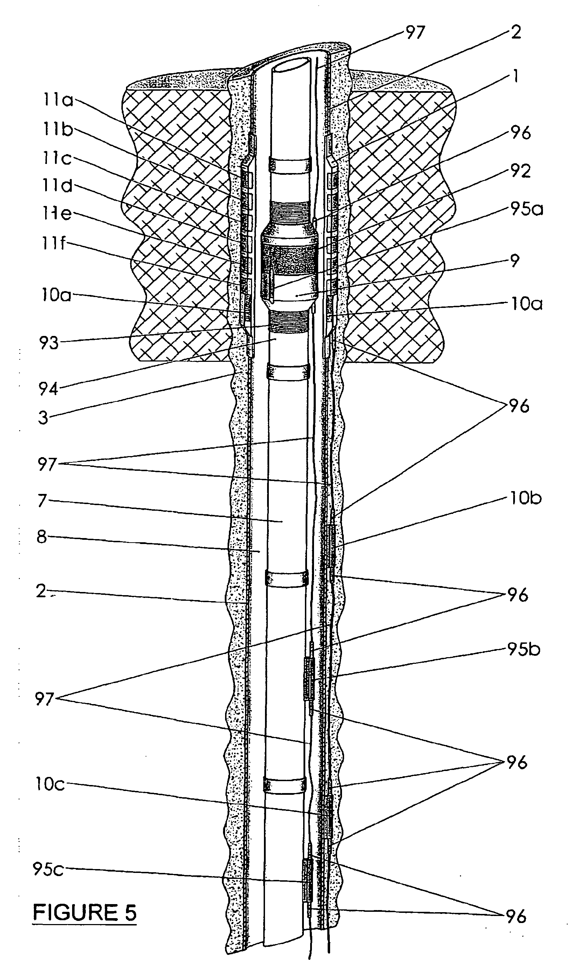

Figure 5 shows the system described by Figure 1 expanded to include more sensors on either side of the wellbore casing. Similar reference numerals are used for similar features as in Figures 1 to 4. On the inside, branched-off from the SEU are sensors 95a, 95b and 95c, for example, and on the outside, branched-off from the WSU are further sensors 10a, 10b and 10c, for example.

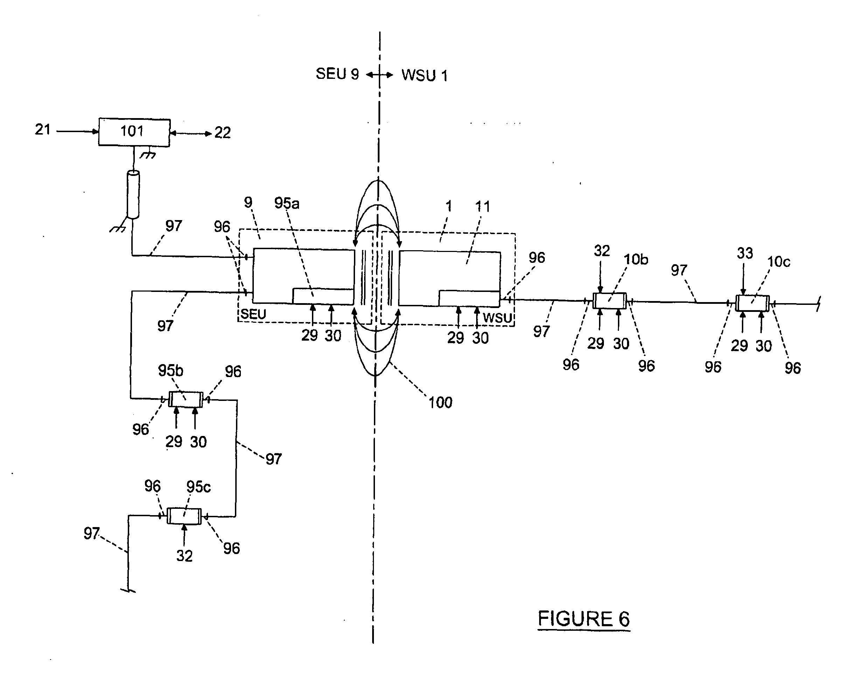

Figure 6 is the corresponding schematic block diagram showing the multiple sensors networked to operate from a single-node and illustrates the cascading of sensors on both sides of wellbore casing. Referring to Figure 6, the sensors are depicted measuring open hole properties, for example, pressure 29, temperature 30, resistivity 32, and the oil/water interface level 33.

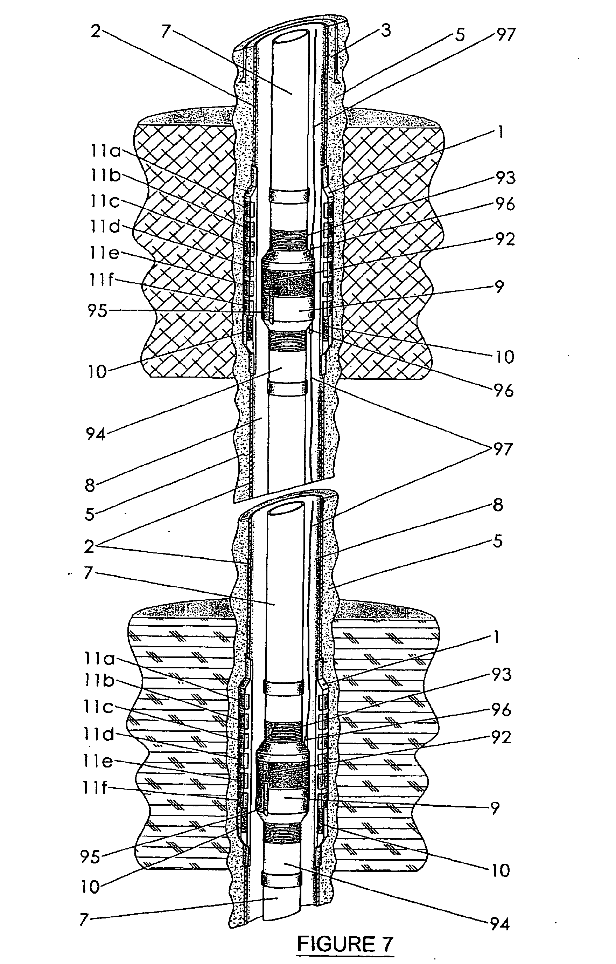

Figure 7 shows the system described by Figure 1 expanded to include multiple nodes by means of two or more sets of SEU and WSU installed. Similar reference numerals are used for similar features as in Figures 1 to 4. On the inside, and operated on the same cable 97, are shown two SEUs 9 which have associated WSUs 1 at the same elevation externally of the wellbore. In the figure, both WSUs 1 are facing the formation, but it would be possible to have both facing inwards or have one facing inwards and one facing the formation.

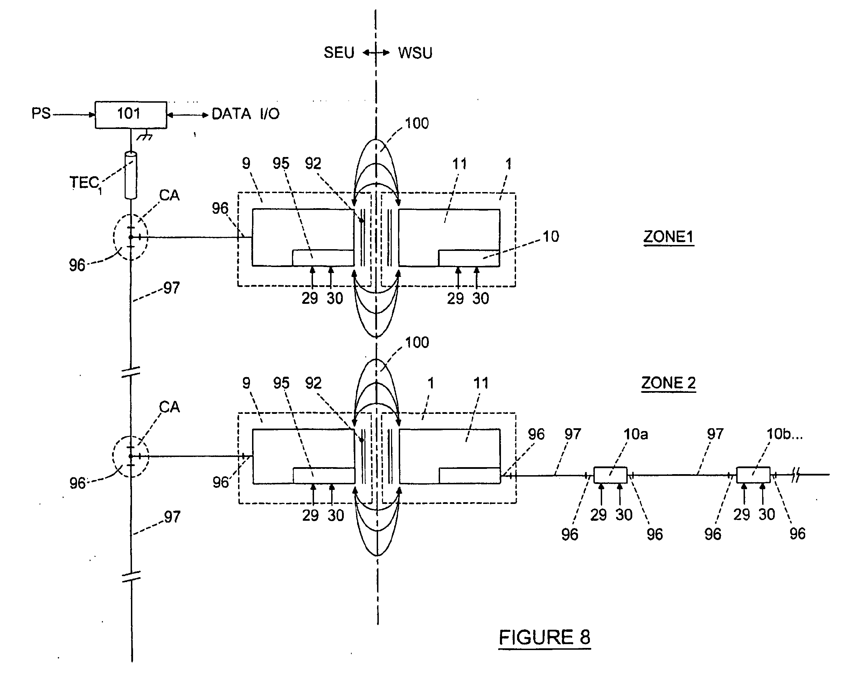

Figure 8 is the corresponding schematic block diagram showing the multiple sensors on the multiple WSUs, associated with the multiple SEUs all operated off the one cable 97. Referring to Figure 8, the sensors are depicted measuring open hole properties, for example, pressure 29 and temperature 30.

## Claims

1. Apparatus to provide monitoring of parameters outside the wellbore casing (2) of a well, said apparatus comprising:
a Wireless Sensor Unit (WSU) (1), placed outside a section of a non-magnetic casing (20), said WSU including a sensor device (10) to measure parameters of its surroundings, in which the WSU (1) may be installed or positioned at any elevation of the wellbore (6) and wherein the WSU (1) is powered by Power Harvesting (100) where the frequency of the induction signal is in the range of 10- 1000 Hz for deep penetration through the non-magnetic casing (20),
an internal Sensor Energizer Unit (SEU) (9) placed inside the wellbore casing (2), said SEU being used for power and communication (100) with the WSU (1), and wherein the SEU (9) is attached to a well tubing or completion program by tubing (7) having a thread (93) that allows adjustment of its elevation, and wherein SEU (9) converts the dc power supplied on a cable (97) from surface to an alternating electromagnetic field (100) that provides a source of power for the WSU (1) outside the casing (2);
wherein the SEU (9) and WSU (1) use an electromagnetic modulation technique to provide communication of data between the two components; and
wherein the SEU (9) and the WSU (1) are arranged to be at exactly the same elevation.

2. Apparatus as claimed in claim 1, in which the WSU (1) is mounted near the wellhead, or the WSU (1) is mounted distally from the wellhead, far down in the formation.

3. Apparatus as claimed in any preceding claim, in which there are two or more sensors (10) in the WSU (1), and in which all of the sensors (10) of the WSU (1) may be placed on the outside of the wellbore casing without compromising the pressure integrity of the well, and in which the sensors (10) measure one or more parameters of the surroundings.

4. Apparatus as claimed in any preceding claim, in which the sensors (10) are branched off from the WSU (1) and connected to a common electrical wire harness (97) attached to the outside of the casing (2), and in which the wiring harness (97) may be either a single or multi-conductor type downhole cable (TEC).

5. Apparatus as claimed in any preceding claim, in which the sensor (10) or sensors of the WSU (1) are of a permanent type, and in which the WSU (1) and its sensor configuration (10) is cemented in place directly facing the formation, or the WSU (1) and its sensor configuration (10) is open hole and directly facing the formation, or the WSU (1) and its sensor configuration (10) is part of a wellbore pressure containment system in the annulus and facing an outer wellbore casing, or the WSU (1) and its sensor configuration (10) is cemented in place facing an outer wellbore casing.

6. Apparatus as claimed in any preceding claim, further comprising one or more power harvesting coils (11 a-f) spaced out over a given section of the non magnetic casing (2), and in which the coils or a band of the non-magnetic casing (20) may provide the required completion or space-out tolerance for system when landing the well tubing or tubing-hanger in the wellhead or tree.

7. Apparatus as claimed in any preceding claim, in which the WSU (1) includes or is connected to a secondary energy source, such as a battery or a downhole generator.

8. Apparatus as claimed in any preceding claim, in which the SEU (9) further includes one or more sensors (95) to measure parameters inside the wellbore casing (2) or tubing (7) to which it is attached, and wherein the sensors (95) may be an integral part of the SEU (9), or branched-off from the SEU (9) and connected to a common electrical wiring harness (97) such as a single or multi- conductor type downhole cable (TEC), or the sensor system may be a combination of integral sensor and sensors branched-off.

9. Apparatus as claimed in any preceding claim, in which the sensors measure parameters relating to:
the well process such as pressure, temperature, flow quantity, flow velocity, flow direction, turbidity, composition, oil level, oil-water interface level, density, salinity, displacements, vibrations, pH, resistivity, radioactivity, sand content, thermal conductivity, as well as other chemical and physical properties.
its structural components such as shock, vibrations, inclinations, magnetic properties, electrical properties, tool-face or other type of tool orientation, as well as stress and strain properties,
or formation parameters outside the well bore casing, such as pressure, temperature, radioactivity, resistivity, density, pH, salinity, electro- magnetic and/or electrical fields, sound, sound velocity, thermal conductivity, as well as other chemical and physical properties.

10. Apparatus as claimed in any preceding claim, further comprising:
means to induce a response from the surroundings, which means may be selected from: a magnetic field source, an electric field source, sound waves, pressure, temperature, shear-force waves, other final element or actuator part of downhole process control, final element or actuator used towards formation to assist any of above listed measurements,
and/or one or more of: noise cancelling of parameter offsets due to offset created by the well process or environment; prediction and correction of measurements due to thermal and pressure gradients within the system.

11. A method of monitoring parameters outside the wellbore casing (2) of a well, said method comprising:
installing a Wireless Sensor Unit (WSU) (1), including a sensor device (10) to measure parameters of its surroundings, at a location outside a section of a non-magnetic casing (20), in which the WSU (1) may be installed or positioned at any elevation of the wellbore (6)
installing an internal Sensor Energizer Unit (SEU) (9) inside the wellbore casing (2), said SEU being used for power and communication (100) with the WSU (1), and wherein the SEU (9) is attached to the well tubing or completion program by tubing (7) having a thread (93) that allows adjustment of its elevation;
arranging the SEU (9) and the WSU (1) to be at exactly the same elevation by means of a threaded connection;
powering the WSU (1) by Power Harvesting (100) where the frequency of the induction signal is in the range of 10-1000 Hz for deep penetration through the non-magnetic casing (20);
converting the dc power supplied on a cable (97) from surface to an alternating electromagnetic field (100) that provides a source of power for the WSU (1) outside the casing (2); and
using an electromagnetic modulation technique to provide communication of data between the WSU (1) and the SEU (9).

12. A method as claimed in claim 11, in which the WSU (1) is mounted near the wellhead, or the WSU (1) is mounted distally from the wellhead, far down in the formation.

13. A method as claimed in any one of claims 11 to 12, in which there are two or more sensors (10) in the WSU (1), and in which all of the sensors (10) of the WSU (1) may be placed on the outside of the wellbore casing without compromising the pressure integrity of the well, and in which the sensors (10) measure one or more parameters of the surroundings.

14. A method as claimed in any one of claims 11 to 13, in which the sensors (10) are branched off from the WSU (1) and connected to a common electrical wire harness (97) attached to the outside of the casing (2), and in which the wiring harness (97) may be either a single or multi-conductor type downhole cable (TEC).

15. A method as claimed in any one of claims 11 to 14, in which the sensor (10) or sensors of the WSU (1) are of a permanent type, and the WSU (I) and its sensor configuration (10) is cemented in place directly facing the formation, or the WSU (1) and its sensor configuration (10) is open hole and directly facing the formation or the WSU (1) and its sensor configuration (10) is part of a wellbore pressure containment system in the annulus and facing an outer wellbore casing, or the WSU (1) and its sensor configuration (10) is cemented in place facing an outer wellbore casing.

16. A method as claimed in any one of claims 11 to 15, further comprising the addition of one or more power harvesting coils (11a-f) spaced out over a given section of the non magnetic casing (2), and in which the coils or a band of the non-magnetic casing (20) may provide the required completion or space-out tolerance for system when landing the well tubing or tubing-hanger in the wellhead or tree.

17. A method as claimed in any one of claims 11 to 16, in which the WSU (1) includes or is connected to a secondary energy source, such as a battery or a downhole generator.

18. A method as claimed in any one of claims 11 to 17, in which the SEU (9) further includes one or more sensors (95) to measure parameters inside the wellbore casing (2) or tubing (7) to which it is attached, and wherein the sensors (95) may be an integral part of the SEU (9), or branched-off from the SEU (9) and connected to a common electrical wiring harness (97) such as a single or multi- conductor type downhole cable (TEC), or the sensor system may be a combination of integral sensor and sensors branched-off.

19. A method as claimed in any one of claims 11 to 18, in which the sensors measure parameters relating to:
the well process such as pressure, temperature, flow quantity, flow velocity, flow direction, turbidity, composition, oil level, oil- water interface level, density, salinity, displacements, vibrations, pH, resistivity, radioactivity, sand content, thermal conductivity, as well as other chemical and physical properties,
its structural components such as shock, vibrations, inclinations, magnetic properties, electrical properties, tool-face or other type of tool orientation, as well as stress and strain properties,
or formation parameters outside the wellbore casing, such as pressure, temperature, radioactivity, resistivity, density, pH, salinity, electro- magnetic and/or electrical fields, sound, sound velocity, thermal conductivity, as well as other chemical and physical properties.

20. A method as claimed in any one of claims 11 to 19, further comprising the step of inducing a response from the surroundings, which inducement may be by any means suitable for inducing any one or more of: a magnetic field, an electric field, sound waves, pressure, temperature, shear-force waves, other final element or actuator part of downhole process control, final element or actuator used towards formation to assist any of above listed measurements;
and/or one or more of the following steps: noise cancellation of parameter offsets due to offset created by the well process or environment; prediction and correction of measurements due to thermal and pressure gradients within the system.

## Patentansprüche

1. Vorrichtung zum Vorsehen einer Überwachung von Parametern an der Außenseite des Bohrloch-Gehäuses (2) einer Quelle, welche Vorrichtung aufweist:
eine drahtlose Sensor-Einheit (WSU) (1), die an der Außenseite eines Abschnitts eines unmagnetischen Gehäuses (20) platziert ist, welche WSU eine Sensor-Einrichtung (10) aufweist, um Parameter ihrer Umgebung zu messen, wobei die WSU (1) in jeder Höhe des Bohrlochs (6) installiert oder positioniert sein kann, und wobei die WSU (1) durch Energiegewinnung (100) angetrieben wird, wobei die Frequenz des Induktionssignals im Bereich von 10-1000 Hz zum tiefen Eindringen durch das unmagnetische Gehäuse (20) liegt,
eine innere Sensor-Energiequellen-Einheit (SEU) (9), die im Inneren des Bohrloch-Gehäuses (2) platziert ist, welche SEU zum Antreiben und zur Kommunikation (100) mit der WSU (1) verwendet wird, und wobei die SEU (9) an einem Quellen-Verrohrungs- oder -Fertigstellungsprogramm durch eine Verrohrung (7) befestigt ist, die ein Gewinde (93) hat, welches das Einstellen ihrer Höhe ermöglicht, und wobei die SEU (9) die an einem Kabel (97) von der Oberfläche gelieferte Gleichstromleistung in ein elektromagnetisches Wechselfeld (100) umwandelt, das eine Energiequelle für die WSU (1) an der Außenseite des Gehäuses (2) vorsieht;
wobei die SEU (9) und die WSU (1) eine elektromagnetische Modulationstechnik verwenden, um eine Daten-Kommunikation zwischen den beiden Komponenten vorzusehen, und
wobei die SEU (9) und die WSU (1) so angeordnet sind, dass sie sich genau auf der gleichen Höhe befinden.

2. Vorrichtung nach Anspruch 1, worin die WSU (1) in der Nähe der Bohrlochmündung angebracht ist, oder wobei die WSU (1) distal von der Bohrlochmündung weit unten in der Anordnung angebracht ist.

3. Vorrichtung nach einem vorhergehenden Anspruch, wobei zwei oder mehrere Sensoren (10) in der WSU (1) vorgesehen sind, und wobei alle Sensoren (10) der WSU (1) an der Außenseite des Bohrloch-Gehäuses platziert sein können, ohne die Druck-Integrität der Quelle zu beeinträchtigen, und wobei die Sensoren (10) einen oder mehrere Parameter der Umgebung messen.

4. Vorrichtung nach einem vorhergehenden Anspruch, wobei die Sensoren (10) von der WSU (1) abgezweigt und mit einem gemeinsamen elektrischen Kabelstrang (97) verbunden sind, der an der Außenseite des Gehäuses (2) befestigt ist, und wobei der Kabelstrang (97) entweder vom Einzel- oder vom Mehrleiter-Bohrlochkabel-Typ (TEC) ist.

5. Vorrichtung nach einem vorhergehenden Anspruch, wobei der Sensor (10) oder die Sensoren der WSU (1) vom permanenten Typ sind, und wobei die WSU (1) und ihre Sensor-Konfiguration (10) der Anordnung direkt zugewandt an Ort und Stelle einzementiert ist, oder wobei die WSU (1) und ihre Sensor-Konfiguration (10) frei im Bohrloch ist und der Anordnung direkt zugewandt ist, oder wobei die WSU (1) und ihre Sensor-Konfiguration (10) Teil eines Bohrloch-Druckeindämmungssystems im Ringraum ist und einem äußeren Bohrloch-Gehäuse zugewandt ist, oder wobei die WSU (1) und ihre Sensor-Konfiguration (10) einem äußeren Bohrloch-Gehäuse zugewandt an Ort und Stelle einzementiert ist.

6. Vorrichtung nach einem vorhergehenden Anspruch, welche weiters eine oder mehrere Energiegewinnungswicklungen (11 a-f) aufweist, die über einen bestimmten Abschnitt des unmagnetischen Gehäuses (2) verteilt sind, und wobei die Wicklungen oder ein Band des unmagnetischen Gehäuses (20) die benötigte Komplettierung oder Verteilungs-Toleranz für das System vorsehen kann, wenn die Bohrloch-Verrohrung oder der Steigrohrhänger in der Bohrlochmündung oder im Steigrohrkopf eingebracht wird.

7. Vorrichtung nach einem vorhergehenden Anspruch, wobei die WSU (1) eine sekundäre Energiequelle aufweist oder mit dieser verbunden ist, wie eine Batterie oder einen Bohrloch-Generator.

8. Vorrichtung nach einem vorhergehenden Anspruch, wobei die SEU (9) weiters einen oder mehrere Sensoren (95) aufweist, um Parameter im Inneren des Bohrloch-Gehäuses (2) oder der Verrohrung (7), woran sie befestigt ist, zu messen, und wobei die Sensoren (95) ein integraler Teil der SEU (9) oder von der SEU (9) abgezweigt und mit einem gemeinsamen elektrischen Kabelstrang (97) verbunden sein können, wie einem Bohrlochkabel vom Einzel- oder vom Mehrleiter-Typ (TEC), oder wobei das Sensor-System eine Kombination aus integralem Sensor und abgezweigten Sensoren sein kann.

9. Vorrichtung nach einem vorhergehenden Anspruch, wobei die Sensoren Parameter messen in Bezug auf:
den Bohrloch-Prozess, wie Druck, Temperatur, Durchflussmenge, Fließgeschwindigkeit, Fließrichtung, Turbidität, Zusammensetzung, Öl-Höhe, Öl-Wasser-Trennschicht-Höhe, Dichte, Salinität, Verdrängungen, Vibrationen, pH-Wert, Widerstandsfähigkeit, Radioaktivität, Sandgehalt, Wärmeleitfähigkeit sowie andere chemische und physikalische Eigenschaften,
ihre Konstruktionskomponenten, wie Erschütterung, Vibrationen, Neigungen, magnetische Eigenschaften, elektrische Eigenschaften, Werkzeug-Fläche oder eine andere Art von Werkzeug-Ausrichtung, sowie Spannungs- und Dehnungseigenschaften,
oder Anordnungs-Parameter außerhalb des Bohrloch-Gehäuses, wie Druck, Temperatur, Radioaktivität, Widerstandsfähigkeit, Dichte, pH-Wert, Salinität, elektromagnetische und/oder elektrische Felder, Schall, Schallgeschwindigkeit, Wärmeleitfähigkeit sowie andere chemische und physikalische Eigenschaften.

10. Vorrichtung nach einem vorhergehenden Anspruch, welche weiters aufweist:
Mittel zum Induzieren einer Reaktion aus der Umgebung, welche Mittel ausgewählt sein können aus: einer Magnetfeldquelle, einer Quelle eines elektrischen Feldes, Schallwellen, Druck, Temperatur, Scherkraftwellen, einem anderen Endelement oder Bedienungsteil der Bohrloch-Prozess-Steuerung, einem Endelement oder Bedienungselement, das für die Anordnung benützt wird, um jegliche der oben aufgezählten Messungen zu unterstützen;
und/oder eines oder mehreres von: Rauschunterdrückung von Parameter-Versetzungen infolge einer Versetzung, die durch den Bohrloch-Prozess oder die Umgebung erzeugt ist; Vorhersage und Korrektur von Messungen infolge von Wärme- und Druck-Gradienten innerhalb des Systems.

11. Verfahren zum Überwachen von Parametern an der Außenseite des Bohrloch-Gehäuses (2) einer Quelle, welches Verfahren umfasst:
Einbauen einer drahtlosen Sensor-Einheit (WSU) (1) einschließlich einer Sensor-Einrichtung (10) zum Messen von Parametern ihrer Umgebung, an einer Stelle an der Außenseite eines Abschnitts eines unmagnetischen Gehäuses (20), wobei die WSU (1) an jeder Höhe des Bohrlochs (6) eingebaut oder positioniert werden kann;
Einbauen einer inneren Sensor-Energiequellen-Einheit (SEU) (9) im Inneren des Bohrloch-Gehäuses (2), welche SEU zum Antreiben und zur Kommunikation (100) mit der WSU (1) verwendet wird, und wobei die SEU (9) an einem Quellen-Verrohrungs- oder -Fertigstellungsprogramm durch eine Verrohrung (7) befestigt ist, die ein Gewinde (93) hat, welches das Einstellen ihrer Höhe ermöglicht,
Anordnen der SEU (9) und der WSU (1), so dass sie sich genau auf der gleichen Höhe befinden, mittels einer Gewinde-Verbindung;
Antreiben der WSU (1) durch Energiegewinnung (100), wobei die Frequenz des Induktionssignals im Bereich von 10-1000 Hz zum tiefen Eindringen durch das unmagnetische Gehäuse (20) liegt;
Umwandeln der auf einem Kabel (97) von der Oberfläche gelieferten Gleichstromleistung in ein elektromagnetisches Wechselfeld (100), das eine Energiequelle für die WSU (1) an der Außenseite des Gehäuses (2) vorsieht; und
Verwenden einer elektromagnetischen Modulationstechnik, um eine Daten-Kommunikation zwischen der WSU (1) und der SEU (9) vorzusehen.

12. Verfahren nach Anspruch 11, worin die WSU (1) in der Nähe der Bohrlochmündung angebracht ist, oder wobei die WSU (1) distal von der Bohrlochmündung weit unten in der Anordnung angebracht ist.

13. Verfahren nach einem der Ansprüche 11 bis 12, wobei zwei oder mehr Sensoren (10) in der WSU (1) vorgesehen sind, und wobei alle Sensoren (10) der WSU (1) an der Außenseite des Bohrloch-Gehäuses platziert werden können, ohne die Druck-Integrität der Quelle zu beeinträchtigen, und wobei die Sensoren (10) einen oder mehrere Parameter der Umgebung messen.

14. Verfahren nach einem der Ansprüche 11 bis 13, wobei die Sensoren (10) von der WSU (1) abgezweigt und mit einem gemeinsamen elektrischen Kabelstrang (97) verbunden sind, der an der Außenseite des Gehäuses (2) befestigt ist, und wobei der Kabelstrang (97) entweder ein Bohrlochkabel vom Einzel- oder vom Mehrleiter-Typ (TEC) sein kann.

15. Verfahren nach einem der Ansprüche 11 bis 14, wobei der Sensor (10) oder die Sensoren der WSU (1) vom permanenten Typ sind, und wobei die WSU (1) und ihre Sensor-Konfiguration (10) der Anordnung direkt zugewandt an Ort und Stelle einzementiert ist, oder wobei die WSU (1) und ihre Sensor-Konfiguration (10) frei im Bohrloch ist und der Anordnung direkt zugewandt ist, oder wobei die WSU (1) und ihre Sensor-Konfiguration (10) Teil eines Bohrloch-Druckeindämmungssystems im Ringraum ist und einem äußeren Bohrloch-Gehäuse zugewandt ist, oder wobei die WSU (1) und ihre Sensor-Konfiguration (10) einem äußeren Bohrloch-Gehäuse zugewandt an Ort und Stelle einzementiert ist.

16. Verfahren nach einem der Ansprüche 11 bis 15, welches weiters den Zusatz einer oder mehrerer Energiegewinnungswicklungen (11a-f) umfasst, die über einen bestimmten Abschnitt des unmagnetischen Gehäuses (2) verteilt sind, und wobei die Wicklungen oder ein Band des unmagnetischen Gehäuses (20) die benötigte Komplettierung oder Verteilungs-Toleranz für das System vorsehen kann, wenn die Bohrloch-Verrohrung oder der Steigrohrhänger in der Bohrlochmündung oder im Steigrohrkopf eingebracht wird.

17. Verfahren nach einem der Ansprüche 11 bis 16, wobei die WSU (1) eine sekundäre Energiequelle aufweist oder mit dieser verbunden ist, wie eine Batterie oder einen Bohrloch-Generator.

18. Verfahren nach einem der Ansprüche 11 bis 17, wobei die SEU (9) weiters einen oder mehrere Sensoren (95) aufweist, um Parameter im Inneren des Bohrloch-Gehäuses (2) oder der Verrohrung (7), woran sie befestigt ist, zu messen, und wobei die Sensoren (95) ein integraler Teil der SEU (9) oder von der SEU (9) abgezweigt und mit einem gemeinsamen elektrischen Kabelstrang (97) verbunden sein können, wie einem Bohrlochkabel vom Einzel- oder vom Mehrleiter-Typ (TEC), oder wobei das Sensor-System eine Kombination aus integralem Sensor und abgezweigten Sensoren sein kann.

19. Verfahren nach einem der Ansprüche 11 bis 18, wobei die Sensoren Parameter messen in Bezug auf:
den Bohrloch-Prozess, wie Druck, Temperatur, Durchflussmenge, Fließgeschwindigkeit, Fließrichtung, Turbidität, Zusammensetzung, Öl-Höhe, Öl-Wasser-Trennschicht-Höhe, Dichte, Salinität, Verdrängungen, Vibrationen, pH-Wert, Widerstandsfähigkeit, Radioaktivität, Sandgehalt, Wärmeleitfähigkeit sowie andere chemische und physikalische Eigenschaften,
seine Konstruktions-Komponenten, wie Erschütterung, Vibrationen, Neigungen, magnetische Eigenschaften, elektrische Eigenschaften, Werkzeug-Fläche oder eine andere Art von Werkzeug-Ausrichtung, sowie Spannungs- und Dehnungseigenschaften,
oder Anordnungs-Parameter außerhalb des Bohrloch-Gehäuses, wie Druck, Temperatur, Radioaktivität, Widerstandsfähigkeit, Dichte, pH-Wert, Salinität, elektromagnetische und/oder elektrische Felder, Schall, Schallgeschwindigkeit, Wärmeleitfähigkeit sowie andere chemische und physikalische Eigenschaften.

20. Verfahren nach einem der Ansprüche 11 bis 19, welches weiters den Schritt des Induzierens einer Reaktion aus der Umgebung umfasst, welches Induzieren mit jeglichen Mitteln erfolgen kann, die geeignet sind zum Induzieren von einem oder mehreren von: einem Magnetfeld, einem elektrischen Feld, Schallwellen, Druck, Temperatur, Scherkraftwellen, einem anderen Endelement oder Bedienungsteil der Bohrloch-Prozess-Steuerung, einem Endelement oder Bedienungselement, das für die Anordnung benützt wird, um jegliche der oben aufgezählten Messungen zu unterstützen,
und/oder einen oder mehrere der folgenden Schritte: Rauschunterdrückung von Parameter-Versetzungen infolge einer Versetzung, die durch den Bohrlochprozess oder die Umgebung erzeugt ist; Vorhersage und Korrektur von Messungen infolge von Wärme- und Druck-Gradienten innerhalb des Systems.

## Revendications

1. Appareil pour fournir une surveillance de paramètres à l'extérieur du tubage de forage (2) d'un puits, ledit appareil comprenant :
une unité de capteur sans fil (« Wireless Sensor Unit » ou WSU) (1), positionnée à l'extérieur d'une section d'un tubage non magnétique (20), ladite WSU comprenant un dispositif capteur (10) pour mesurer des paramètres de ses environs, dans lequel la WSU (1) peut être installée ou positionnée à une quelconque élévation du forage (6) et dans lequel la WSU (1) est alimentée par récupération d'énergie (100) où la fréquence du signal d'induction est dans la plage de 10 à 1000 Hz pour pénétration profonde à travers le tubage non magnétique (20) ;
une unité de mise sous tension de capteur (« Sensor Energizer Unit ») interne (9) positionnée à l'intérieur du tubage de forage (2), ladite SEU étant utilisée pour l'alimentation et la communication (100) avec la WSU (1), et dans lequel la SEU (9) est fixée à une colonne de production de puits ou un programme de complétion par une colonne de production (7) comportant un filet (93) qui permet le réglage de son élévation, et dans lequel la SEU (9) convertit l'alimentation en courant continu fournie sur un câble (97) à partir de la surface en un champ électromagnétique alternatif (100) qui fournit une source d'alimentation en énergie électrique pour la WSU (1) à l'extérieur du tubage (2) ; dans lequel la SEU (9) et la WSU (1) utilisent une technique de modulation électromagnétique pour fournir une communication de données entre les deux composants ; et
dans lequel la SEU (9) et la WSU (1) sont agencées pour être exactement à la même élévation.

2. Appareil selon la revendication 1, dans lequel la WSU (1) est montée près de la tête de puits, ou la WSU (1) est montée de façon distale par rapport à la tête de puits, profondément dans la formation.

3. Appareil selon une quelconque revendication précédente, dans lequel il y a deux, ou plus, capteurs (10) dans la WSU (1), et dans lequel tous les capteurs (10) de la WSU (1) peuvent être positionnés sur l'extérieur du tubage de forage sans compromettre l'intégrité de pression du puits, et dans lequel les capteurs (10) mesurent un ou plusieurs paramètres des environs.

4. Appareil selon une quelconque revendication précédente, dans lequel les capteurs (10) bifurquent de la WSU (1) et sont connectés à un faisceau électrique commun (97) fixé à l'extérieur du tubage (2), et dans lequel le faisceau électrique (97) peut être un câble (« Tubing Electric Cable », ou câble électrique de colonne de production, ou TEC) en fond de trou à conducteur unique ou multiple.

5. Appareil selon une quelconque revendication précédente, dans lequel le capteur (10) ou les capteurs de la WSU (1) sont d'un type permanent, et dans lequel la WSU (1), et sa configuration de capteur (10), est cimentée en place directement en face de la formation, ou la WSU (1), et sa configuration de capteur (10), est en trou découvert et directement en face de la formation, ou la WSU (1), et sa configuration de capteur (10), fait partie d'un système de confinement de pression de forage dans l'espace annulaire et en face d'un tubage de forage extérieur, ou la WSU (1), et sa configuration de capteur (10), est cimentée en place en face d'un tubage de forage extérieur.

6. Appareil selon une quelconque revendication précédente, comprenant en outre une ou plusieurs bobines de récupération d'énergie (11a-f) espacées sur une section donnée du tubage non magnétique (2), et dans lequel les bobines ou une bande du tubage non magnétique (20) peut fournir la tolérance requise de complétion ou d'espacement pour le système lors du positionnement de la colonne de production de puits ou du dispositif de suspension de colonne de production dans la tête de puits ou l'arbre.

7. Appareil selon une quelconque revendication précédente, dans lequel la WSU (1) comprend, ou est connectée à, une source d'énergie secondaire, telle qu'une batterie ou qu'un générateur en fond de trou.

8. Appareil selon une quelconque revendication précédente, dans lequel la SEU (9) comprend en outre un ou plusieurs capteurs (95) pour mesurer des paramètres à l'intérieur du tubage de forage (2) ou de la colonne de production (7) auquel elle est fixée, et dans lequel les capteurs (95) peuvent être une partie intégrante de la SEU (9), ou peuvent bifurquer de la SEU (9) et être connectés à un faisceau électrique commun (97) telle qu'un câble (« Tubing Electric Cable », ou câble électrique de colonne de production, ou TEC) en fond de trou à conducteur unique ou multiple, ou le système capteur peut être une association de capteurs intégrés et de capteurs en bifurcation.

9. Appareil selon une quelconque revendication précédente, dans lequel les capteurs mesurent des paramètres concernant :
le procédé de puits, tel que la pression, la température, la quantité d'écoulement, la vitesse d'écoulement, la direction d'écoulement, la turbidité, la composition, le niveau de pétrole, le niveau d'interface pétrole-eau, la densité, la salinité, les déplacements, les vibrations, le pH, la résistivité, la radioactivité, la teneur en sable, la conductivité thermique, ainsi que d'autres propriétés chimiques et physiques,
ses composants structurels, tels que le choc, les vibrations, les inclinaisons, les propriétés magnétiques, les propriétés électriques, la face d'outil ou un autre type d'orientation d'outil, ainsi que des propriétés d'effort et de contrainte,
ou des paramètres de formation à l'extérieur du tubage de forage, tels que la pression, la température, la radioactivité, la résistivité, la densité, le pH, la salinité, les champs électromagnétiques et/ou électriques, le son, la vitesse du son, la conductivité thermique, ainsi que d'autres propriétés chimiques et physiques.

10. Appareil selon une quelconque revendication précédente, comprenant en outre :
des moyens pour entraîner une réponse à partir des environs, lesquels moyens peuvent être sélectionnés parmi : une source de champ magnétique, une source de champ électrique, des ondes sonores, une pression, une température, des ondes de force de cisaillement, un autre élément ou actionneur final de commande de procédé en fond de trou, un élément ou actionneur final utilisé vers la formation pour aider une quelconque des mesures dont la liste est fournie ci-dessus,
et/ou un ou plusieurs éléments parmi : l'élimination de bruit de paramètres décalés dus à un décalage créé par le procédé ou l'environnement de puits ; la prédiction et la correction de mesures dues à des gradients thermiques et de pression à l'intérieur du système.

11. Procédé de surveillance de paramètres à l'extérieur du tubage de forage (2) d'un puits, ledit procédé comprenant :
l'installation d'une unité de capteur sans fil (« Wireless Sensor Unit » ou WSU) (1), comprenant un dispositif capteur (10) pour mesurer des paramètres de ses environs, dans un emplacement à l'extérieur d'une section d'un tubage non magnétique (20), dans lequel la WSU (1) peut être installée ou positionnée à une quelconque élévation du forage (6) en installant une unité de mise sous tension de capteur (« Sensor Energizer Unit » ou SEU) interne (9) à l'intérieur du tubage de forage (2),
ladite SEU étant utilisée pour l'alimentation et la communication (100) avec la WSU (1), et dans lequel la SEU (9) est fixée à la colonne de production de puits ou un programme de complétion par une colonne de production (7) comportant un filet (93) qui permet le réglage de son élévation ;
l'agencement de la SEU (9) et de la WSU (1) pour être exactement à la même élévation, au moyen d'un raccordement fileté ;
l'alimentation de la WSU (1) par récupération d'énergie (100) où la fréquence du signal d'induction est dans la plage de 10 à 1000 Hz pour pénétration profonde à travers le tubage non magnétique (20) ;
la conversion de l'alimentation en courant continu fournie sur un câble (97) à partir de la surface en un champ électromagnétique alternatif (100) qui fournit une source d'alimentation en énergie électrique pour la WSU (1) à l'extérieur du tubage (2) ; et
l'utilisation d'une technique de modulation électromagnétique pour fournir une communication de données entre la WSU (1) et la SEU (9).

12. Procédé selon la revendication 11, dans lequel la WSU (1) est montée près de la tête de puits, ou la WSU (1) est montée de façon distale par rapport à la tête de puits, profondément dans la formation.

13. Procédé selon une quelconque des revendications 11 à 12, dans lequel il y a deux, ou plus, capteurs (10) dans la WSU (1), et dans lequel tous les capteurs (10) de la WSU (1) peuvent être positionnés sur l'extérieur du tubage de forage sans compromettre l'intégrité de pression du puits, et dans lequel les capteurs (10) mesurent un ou plusieurs paramètres des environs.

14. Procédé selon une quelconque des revendications 11 à 13, dans lequel les capteurs (10) bifurquent de la WSU (1) et sont connectés à un faisceau électrique commun (97) fixé à l'extérieur du tubage (2), et dans lequel le faisceau électrique (97) peut être un câble (« Tubing Electric Cable », ou câble électrique de colonne de production, ou TEC) en fond de trou à conducteur unique ou multiple.

15. Procédé selon une quelconque des revendications 11 à 14, dans lequel le capteur (10) ou les capteurs de la WSU (1) sont d'un type permanent, et la WSU (1), et sa configuration de capteur (10), est cimentée en place directement en face de la formation, ou la WSU (1), et sa configuration de capteur (10), est en trou découvert et directement en face de la formation ou la WSU (1), et sa configuration de capteur (10), fait partie d'un système de confinement de pression de forage dans l'espace annulaire et en face d'un tubage de forage extérieur, ou la WSU (1), et sa configuration de capteur (10), est cimentée en place en face d'un tubage de forage extérieur.

16. Procédé selon une quelconque des revendications 11 à 15, comprenant en outre l'ajout d'une ou de plusieurs bobines de récupération d'énergie (11 a-f) espacées sur une section donnée du tubage non magnétique (2), et dans lequel les bobines ou une bande du tubage non magnétique (20) peuvent fournir la tolérance requise de complétion ou d'espacement pour le système lors du positionnement de la colonne de production de puits ou du dispositif de suspension de colonne de production dans la tête de puits ou l'arbre.

17. Procédé selon une quelconque des revendications 11 à 16, dans lequel la WSU (1) comprend ou est connectée à une source d'énergie secondaire, telle qu'une batterie ou qu'un générateur en fond de trou.

18. Procédé selon une quelconque des revendications 11 à 17, dans lequel la SEU (9) comprend en outre un ou plusieurs capteurs (95) pour mesurer des paramètres à l'intérieur du tubage de forage (2) ou de la colonne de production (7) auquel elle est fixée, et dans lequel les capteurs (95) peuvent être une partie intégrante de la SEU (9), ou peuvent bifurquer de la SEU (9) et être connectés à un faisceau électrique commun (97), tel qu'un câble (« Tubing Electric Cable », ou câble électrique de colonne de production, ou TEC) en fond de trou à conducteur unique ou multiple, ou le système capteur peut être une association de capteurs intégrés et de capteurs en bifurcation

19. Procédé selon une quelconque des revendications 11 à 18, dans lequel les capteurs mesurent des paramètres concernant :
le procédé de puits, tel que la pression, la température, la quantité d'écoulement, la vitesse d'écoulement, la direction d'écoulement, la turbidité, la composition, le niveau de pétrole, le niveau d'interface pétrole-eau, la densité, la salinité, les déplacements, les vibrations, le pH, la résistivité, la radioactivité, la teneur en sable, la conductivité thermique, ainsi que d'autres propriétés chimiques et physiques,
ses composants structurels, tels que le choc, les vibrations, les inclinaisons, les propriétés magnétiques, les propriétés électriques, la face d'outil ou un autre type d'orientation d'outil, ainsi que des propriétés d'effort et de contrainte,
ou des paramètres de formation à l'extérieur du tubage de forage, tels que la pression, la température, la radioactivité, la résistivité, la densité, le pH, la salinité, des champs électromagnétiques et/ou électriques, le son, la vitesse du son, la conductivité thermique, ainsi que d'autres propriétés chimiques et physiques.

20. Procédé selon une quelconque des revendications 11 à 19, comprenant en outre l'étape d'entraînement d'une réponse à partir des environs, lequel entraînement peut être par de quelconques moyens appropriés pour entraîner un ou plusieurs éléments quelconques parmi : un champ magnétique, un champ électrique, des ondes sonores, une pression, une température, des ondes de force de cisaillement, un autre élément ou actionneur final de commande de procédé en fond de trou, un élément ou actionneur final utilisé vers la formation pour aider une quelconque des mesures dont la liste est fournie ci-dessus ;
et/ou une ou plusieurs des étapes suivantes : l'annulation de bruit de paramètres décalés dus à un décalage créé par le procédé ou l'environnement de puits ; la prédiction et la correction de mesures dues à des gradients thermiques et de pression à l'intérieur du système.
